# EUROPÄISCHE PATENTANMELDUNG

(11) **EP 3 858 529 A1**
(43) Veröffentlichungstag der Anmeldung: **04.08.2021**
(21) Anmeldenummer: 20154622.3
(22) Anmeldetag: 30.01.2020
(51) Int. Cl.: B23K 9/02, B23K 9/095, B23K 9/167

(54) **VERFAHREN UND VORRICHTUNG ZUM HANDSCHWEISSEN EINES WERKSTÜCKS MIT EINER NICHTABSCHMELZENDEN ELEKTRODE**

(71) Anmelder: FRONIUS INTERNATIONAL GmbH, 4643 Pettenbach (AT)
(72) Erfinder: WILLINGER, Martin, 4643 Pettenbach (AT); LATTNER, Peter, 4643 Pettenbach (AT)
(74) Vertreter: Sonn & Partner Patentanwälte

(57) **Zusammenfassung**

Die Erfindung betrifft ein Verfahren und eine Vorrichtung (1) zum Handschweißen eines Werkstücks (4) mit einer nichtabschmelzenden Elektrode (2), wobei von einer Stromquelle (3) ein voreingestellter erster Schweißstrom (I₁) zwischen der Elektrode (2) und dem Werkstück (4) zur Bildung eines Lichtbogens (5) eingeprägt wird, und während des Schweißens der Schweißstrom (I) auf einen voreingestellten zweiten Schweißstrom (I₂), der größer ist als der voreingestellte erste Schweißstrom (I₁), erhöht wird. Zur Verbesserung der Schweißqualität und Verhinderung eines Festklebens der Elektrode (2) am Werkstück (4) wird erfindungsgemäß während des Schweißens die Schweißspannung (U) gemessen, und bei Unterschreitung einer voreingestellten unteren Schwellschweißspannung (Uₛᵤ) der Schweißstrom (I) automatisch auf den voreingestellten zweiten Schweißstrom (I₂) und bei Überschreitung der voreingestellten unteren Schwellschweißspannung (Uₛᵤ) automatisch auf den voreingestellten ersten Schweißstrom (I₁) umgeschaltet.

## Beschreibung

Die Erfindung betrifft ein Verfahren zum Handschweißen eines Werkstücks mit einer nichtabschmelzenden Elektrode, insbesondere einer Wolfram-Elektrode, wobei von einer Stromquelle ein voreingestellter erster Schweißstrom zwischen der Elektrode und dem Werkstück zur Bildung eines Lichtbogens eingeprägt wird, und während des Schweißens der Schweißstrom auf einen voreingestellten zweiten Schweißstrom, der größer ist als der voreingestellte erste Schweißstrom, erhöht wird.

Ebenso betrifft die Erfindung eine Vorrichtung zum Handschweißen eines Werkstücks mit einer nichtabschmelzenden Elektrode, insbesondere einer Wolfram-Elektrode, mit einer Stromquelle zum Einprägen eines Schweißstroms zwischen der Elektrode und dem Werkstück zur Bildung eines Lichtbogens, und mit einer Steuereinrichtung, welche zur Messung der Schweißspannung zwischen der nichtabschmelzenden Elektrode und dem Werkstück und zur Messung des Schweißstroms ausgebildet ist.

Beim Handschweißen bzw. manuellen Schweißen mit nichtabschmelzender Elektrode, insbesondere WIG-Handschweißen, kann es bei Werkstücken mit unebener Oberfläche oder bei manchen Schweißverfahren, beispielsweise beim Überschweißen von Heftschweißungen, während des Schweißverfahrens zu Änderungen der Lichtbogenlänge aufgrund der Änderungen des Abstands zwischen der Elektrode und dem Werkstück kommen. Eine Reduktion des Abstands führt zu einem Sinken der Lichtbogenspannung, wodurch es zu einem Erlöschen des Lichtbogens kommen kann.

Zur Abhilfe kann der Schweißstrom manuell auf einen höheren Wert angehoben werden, wenn der Abstand zum Werkstück und somit die Lichtbogenspannung sinkt. Beispielsweise wird beim Überschweißen von Heftpunkten zum Aufschmelzen der Heftpunkte und zur Gewährleistung einer gleichmäßigen Nahtoberfläche und Schweißnahtqualität der Schweißstrom manuell durch Betätigung eines Tasters auf einen höheren Schweißstrom angehoben, wenn der Abstand zwischen Elektrode und Werkstück geringer wird. Die Erhöhung des Schweißstroms ist voreingestellt und kann bis zu 200% des eingestellten normalen Schweißstroms betragen. Nachteilig dabei ist, dass die Umschaltung vom Schweißer manuell durchgeführt werden muss, und daher keine reproduzierbaren Schweißergebnisse erzielt werden können bzw. die Schweißergebnisse vom jeweiligen Know-how des Schweißers abhängen.

Bei Schweißbrennern ohne Taster oder ähnlichem Betätigungselement ist eine manuelle Umschaltung des Schweißstroms gar nicht möglich.

Bekannt ist es auch, den Schweißstrom stetig zu erhöhen, wenn die Spannung unter einen bestimmten Spannungswert fällt, um Leistungsschwankungen zu kompensieren. Die Schweißleistung bzw. das Produkt von Spannung und Strom bleibt also immer gleich. Dadurch können Leistungsschwankungen im Lichtbogen zwar kompensiert werden, ein Erlöschen des Lichtbogens bei Kurzschluss, also bei Berührung des Schmelzbads mit der Elektrode aber nicht verhindert werden.

Die vorliegende Erfindung kann nicht nur bei Handschweißverfahren sondern auch bei automatisierten Schweißverfahren bzw. Roboterschweißverfahren mit nichtabschmelzender Elektrode, insbesondere beim sogenannten Stichlochschweißen, angewendet werden. Neben Lichtbogenschweißverfahren sind auch Plasmabearbeitungsverfahren mit und ohne Zusatzwerkstoff denkbar.

Die Aufgabe der vorliegenden Erfindung besteht in der Schaffung eines oben genannten Verfahrens und einer oben genannten Vorrichtung, durch welche der oben erwähnte Nachteil verhindert werden kann und eine optimale und reproduzierbare Schweißnaht mit möglichst guter Schweißqualität resultiert. Das erfindungsgemäße Verfahren und die erfindungsgemäße Vorrichtung soll möglichst einfach und kostengünstig umsetzbar sein.

Gelöst wird die erfindungsgemäße Aufgabe in verfahrensmäßiger Hinsicht dadurch, dass während des Schweißens die Schweißspannung gemessen wird, und bei Unterschreitung einer voreingestellten unteren Schwellschweißspannung der Schweißstrom automatisch auf den voreingestellten zweiten Schweißstrom und bei Überschreitung der voreingestellten unteren Schwellschweißspannung automatisch auf den voreingestellten ersten Schweißstrom umgeschaltet wird. Dadurch wird eine automatische Umschaltung des Schweißstroms in Abhängigkeit des Abstands der Elektrode zum Werkstück und somit in Abhängigkeit der Lichtbogenlänge erzielt, ohne dass die Schweißleistung konstant bleibt. Der Schweißer braucht keine manuelle Umschaltung des Schweißstroms am Schweißbrenner vornehmen bzw. es muss am Schweißbrenner kein Taster oder ähnliches Betätigungselement vorgesehen werden. Ein Erlöschen des Lichtbogens kann verhindert werden, da die Lichtbogenleistung erhöht wird. Durch die Stromerhöhung und eine gleichzeitige Leistungserhöhung wird das Schmelzbad quasi auseinandergetrieben und ein Festkleben der Elektrode beim Näherkommen zum Werkstück verhindert. Somit resultiert eine qualitativ hochwertige Schweißnaht beim Handschweißen auch bei weniger geübten Schweißern und es können reproduzierbare Schweißergebnisse erzielt werden. Weiters kann ein manuelles Pulsen durch Änderung des Abstands der nichtabschmelzenden Elektrode zum Werkstück durchgeführt werden. Aber auch für manche automatische Schweißanwendungen kann die automatische Schweißstromumschaltung wesentliche Vorteile haben, beispielsweise beim Pendelschweißen einer V-Naht oder einer Kehlnaht, wobei sich der Abstand zwischen Elektrode und Werkstückoberfläche und somit die Lichtbogenlänge ständig verändert. Das erfindungsgemäße Verfahren ist einfach und kostengünstig implementierbar. Anstelle der Schweißspannung können in äquivalenter Weise auch davon abgeleitete Größen, beispielsweise der Widerstand als Quotient von Schweißspannung und Schweißstrom, der Leitwert als Quotient von Schweißstrom und Schweißspannung oder die Schweißleistung als Produkt von Schweißspannung und Schweißstrom oder dgl. mit geeigneten Schwellwerten verwendet werden.

Gemäß einem weiteren Merkmal der Erfindung ist vorgesehen, dass bei Überschreitung einer voreingestellten oberen Schwellschweißspannung der Schweißstrom automatisch auf einen voreingestellten dritten Schweißstrom, der kleiner ist als der voreingestellte erste Schweißstrom, und bei Unterschreitung der voreingestellten oberen Schwellschweißspannung automatisch auf den voreingestellten ersten Schweißstrom umgeschaltet wird. Dadurch kann das Schweißverfahren weiter automatisiert und der Schweißstrom optimal auf den Abstand der Elektrode zum Werkstück und somit die Lichtbogenlänge eingestellt und eine hohe Schweißqualität erzielt werden.

Wenn bei Unterschreitung der voreingestellten unteren Schwellschweißspannung der Schweißstrom mit einer voreingestellten Anstiegsrate auf den voreingestellten zweiten Schweißstrom und bei Überschreitung der voreingestellten unteren Schwellschweißspannung der Schweißstrom mit einer voreingestellten Abfallrate auf den voreingestellten ersten Schweißstrom umgeschaltet wird, kann Einfluss auf die Umschaltung des Schweißstroms genommen werden und eine optimale Abstimmung für die jeweilige Schweißanwendung gefunden werden. Beispielsweise eignen sich raschere Anstiegs- und Abfallraten für den Schweißstrom für Stichlochschweißverfahren besonders, wohingegen beim Schweißen von Blechen mit unterschiedlichen Dicken langsame Anstiegs- und Abfallraten für den Schweißstrom vorteilhaft sind.

Vorteilhafterweise wird auch bei Überschreitung der definierten oberen Schwellschweißspannung der Schweißstrom mit einer voreingestellten Abfallrate auf den voreingestellten dritten Schweißstrom und bei Unterschreitung der definierten oberen Schwellschweißspannung der Schweißstrom mit einer voreingestellten Anstiegsrate auf den voreingestellten ersten Schweißstrom umgeschaltet. Wie bereits oben erwähnt, kann durch die Einstellung der Anstiegs- und Abfallrate des Schweißstroms bei der Umschaltung eine optimale Abstimmung für die jeweilige Schweißanwendung gefunden werden.

Bei Überschreitung einer voreingestellten zweiten oberen Schwellschweißspannung kann der Schweißstrom automatisch mit einer voreingestellten Abfallrate auf Null gesenkt werden. Auf diese Weise kann beim Entfernen der nichtabschmelzenden Elektrode vom Werkstück ein geordnetes und definiertes Beenden des Schweißprozesses und Erlöschen bzw. Abreißen des Lichtbogens durch ein vorgegebenes Senken des Schweißstroms erzielt werden. Bei der voreingestellten zweiten oberen Schwellschweißspannung handelt es sich um die sogenannte Abrissspannung, ab der ein Schweißen nicht mehr möglich ist und somit ein definiertes Schweißende herbeigeführt wird. Die Abrissspannung ist prozess- bzw. materialabhängig und üblicherweise in der Kennlinie bzw. der Tabelle der Schweißparameter hinterlegt oder vom Schweißer einstellbar.

Gemäß einem weiteren Merkmal der Erfindung ist vorgesehen, dass der Schweißstrom auf den voreingestellten zweiten Schweißstrom und bzw. oder voreingestellten dritten Schweißstrom umgeschaltet wird, wenn die Schweißspannung die voreingestellte untere Schwellschweißspannung bzw. die voreingestellte obere Schwellschweißspannung bzw. die voreingestellte zweite obere Schwellschweißspannung eine bestimmte Mindestdauer unter- bzw. überschreitet. Durch die Definition einer solchen Mindestdauer des Unter- bzw. Überschreitens der Schwellschweißspannungen wird die Gefahr eines Schwingens und Fehlauslösungen der Umschaltung des Schweißstroms verhindert.

Wenn die gemessene Schweißspannung vor dem Vergleich mit der voreingestellten unteren Schwellschweißspannung, der voreingestellten oberen Schwellschweißspannung oder der voreingestellten zweiten oberen Schwellschweißspannung über die Zeit gemittelt wird, können ebenfalls unerwünschte automatische Umschaltungen des Schweißstroms und Schwingungen verhindert werden bzw. das gemessene Schweißspannungssignal entsprechend geglättet werden.

Gelöst wird die erfindungsgemäße Aufgabe auch durch eine oben genannte Vorrichtung zum Schweißen eines Werkstücks mit einer nichtabschmelzenden Elektrode, wobei die Steuereinrichtung zur Durchführung des oben beschriebenen Verfahrens ausgebildet ist. Eine solche Vorrichtung ist relativ einfach und kostengünstig implementierbar, insbesondere durch eine softwaremäßige Programmierung eines ohnedies üblicherweise vorhandenen Mikroprozessors als Steuereinrichtung. Zu den dadurch erzielbaren Vorteilen wird auf die obige Beschreibung des erfindungsgemäßen Verfahrens verwiesen.

Vorteilhafterweise ist eine Ein-/Ausgabeeinrichtung zur Einstellung und Anzeige des voreingestellten ersten Schweißstroms, voreingestellten zweiten Schweißstroms, der voreingestellten unteren Schwellschweißspannung, der voreingestellten oberen Schwellschweißspannung, der voreingestellten zweiten oberen Schwellschweißspannung, der voreingestellten Anstiegsrate des Schweißstroms oder der voreingestellten Abfallrate des Schweißstroms vorgesehen. Auf diese Weise können die vordefinierten Parameter des vorliegenden Verfahrens besonders rasch und bequem abgerufen bzw. ausgewählt oder angezeigt werden.

Wenn die Ein-/Ausgabeeinrichtung mit einem Speicher verbunden ist, können verschiedenste Einstellparameter für unterschiedliche Schweißanwendungen gespeichert sein und in bequemer Weise rasch und einfach vom Schweißer eingestellt oder durch die Steuereinrichtung berechnet (beispielsweise interpoliert oder extrapoliert) werden.

Die vorliegende Erfindung wird anhand der beigefügten Zeichnungen näher erläutert. Darin zeigen:

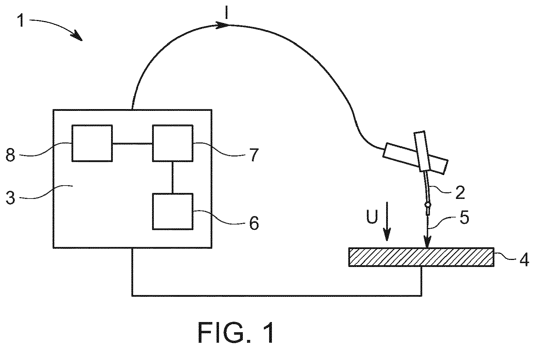

- Fig. 1: ein prinzipieller Aufbau einer Vorrichtung zum Handschweißen mit einer nichtabschmelzenden Elektrode;

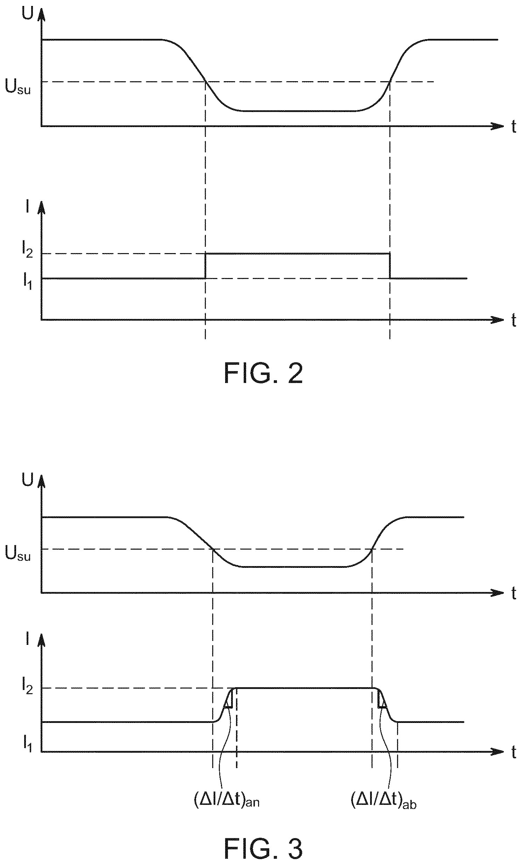

- Fig. 2: die zeitlichen Verläufe der Schweißspannung und des Schweißstroms bei der Unter- und Überschreitung einer voreingestellten unteren Schwellschweißspannung und einer automatischen Umschaltung auf einen voreingestellten höheren zweiten Schweißstrom und zum voreingestellten ersten Schweißstrom zurück bei einer schnellen Anstiegs- und Abfallrate des Schweißstroms;
- Fig. 3: die zeitlichen Verläufe der Schweißspannung und des Schweißstroms bei der Unter- und Überschreitung einer voreingestellten unteren Schwellschweißspannung und einer automatischen Umschaltung auf einen voreingestellten höheren zweiten Schweißstrom und zum voreingestellten ersten Schweißstrom zurück bei einer langsamen Anstiegs- und Abfallrate des Schweißstroms;

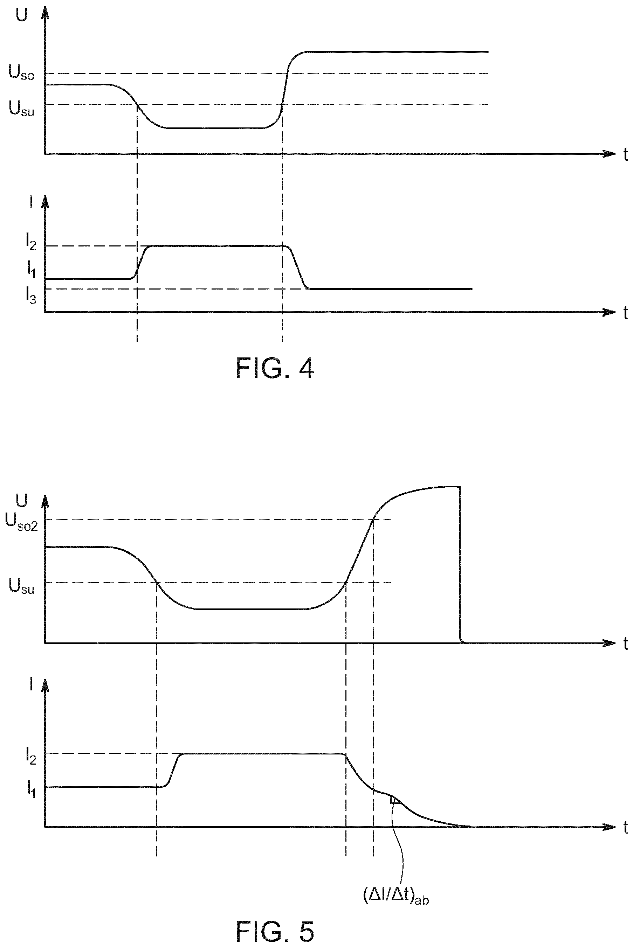

- Fig. 4: die zeitlichen Verläufe der Schweißspannung und des Schweißstroms bei der Unterschreitung einer voreingestellten unteren Schwellschweißspannung und einer automatischen Umschaltung auf einen voreingestellten höheren zweiten Schweißstrom und der Überschreitung einer voreingestellten oberen Schwellschweißspannung und einer automatischen Umschaltung auf einen voreingestellten niedrigeren dritten Schweißstrom;
- Fig. 5: die zeitlichen Verläufe der Schweißspannung und des Schweißstroms bei der Unterschreitung einer voreingestellten unteren Schwellschweißspannung und einer automatischen Umschaltung auf einen voreingestellten höheren zweiten Schweißstrom und der Überschreitung einer voreingestellten zweiten oberen Schwellschweißspannung und einer automatischen Senkung des Schweißstroms auf Null mit einer vordefinierten Abfallrate; und

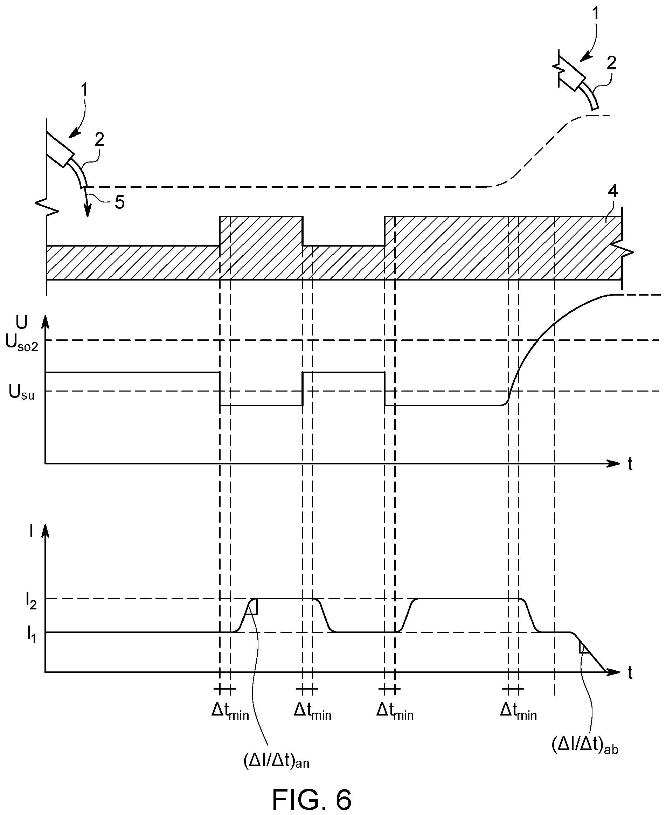

- Fig. 6: schematisch ein Handschweißen eines Werkstücks mit sich ändernder Oberfläche und die zeitlichen Verläufe des zugehörigen Schweißstroms und der Schweißspannung bei der Anwendung des erfindungsgemäßen Verfahrens.

Fig. 1 zeigt einen prinzipiellen Aufbau einer Vorrichtung 1 zum Handschweißen eines Werkstücks 4 mit einer nichtabschmelzenden Elektrode 2, insbesondere einer Vorrichtung 1 zum WIG (Wolfram Inertgas)-Schweißen mit einer Wolfram-Elektrode. Eine Stromquelle 3 wird sowohl mit der nichtabschmelzenden Elektrode 2 als auch mit dem zu bearbeitenden Werkstück 4 aus elektrisch leitfähigem Material verbunden. Die Stromquelle 3 prägt einen Schweißstrom I zwischen der nichtabschmelzenden Elektrode 2 und dem Werkstück 4 ein. Dadurch wird ein Lichtbogen 5 zwischen dem Ende der nichtabschmelzenden Elektrode 2 und dem Werkstück 4 gezündet. Über eine üblicherweise in der Stromquelle 3 befindliche Steuereinrichtung 6 werden die zeitlichen Abläufe gesteuert und die jeweiligen Werte des Schweißstroms I und der Schweißspannung U geregelt. Darüber hinaus ist die Steuereinrichtung 6 zur Messung der Schweißspannung U zwischen der nichtabschmelzenden Elektrode 2 und dem Werkstück 4 und zur Messung des Schweißstroms I ausgebildet. In der Stromquelle 3 kann sich noch eine Ein-/Ausgabeeinrichtung 7, beispielsweise ein Touchscreen, befinden, welche mit der Steuereinrichtung 6 verbunden ist. Die Ein-/Ausgabeeinrichtung 7 dient zur Einstellung und Anzeige der Schweißparameter, insbesondere des Schweißstroms I und der im Zusammenhang mit der gegenständlichen Erfindung beschriebenen voreingestellten Werte für den Schweißstrom I, die Schweißspannung U und deren Anstiegs- und Abfallraten oder davon abgeleitete Größen, wie beispielsweise Widerstände, Leitwerte oder Leistungen. Die voreingestellten Schweißparameter (Schweißströme und Schwellenschweißspannungen oder davon abgeleitete Größen) können auch durch die Steuereinrichtung 6 bzw. den Prozessregler vor, während oder nach dem Schweißprozess festgelegt werden. Mit der Ein-/Ausgabeeinrichtung 7 kann ein Speicher 8 verbunden sein, in dem verschiedene Schweißparameter in Form von sogenannten Schweißkennlinien oder Datensätzen für bestimmte Schweißaufgaben oder Schweißjobs abgelegt sein können, wo sie rasch und einfach abgerufen oder berechnet (interpoliert oder extrapoliert) werden können.

Fig. 2 zeigt die zeitlichen Verläufe der Schweißspannung U und des Schweißstroms I bei der Unter- und Überschreitung einer voreingestellten unteren Schwellschweißspannung Uₛᵤ und einer automatischen Umschaltung auf einen voreingestellten höheren zweiten Schweißstrom I₂ und zum voreingestellten ersten Schweißstrom I₁ zurück bei einer schnellen Anstiegs- und Abfallrate des Schweißstroms I. Die Schweißspannung U wird während des Schweißprozesses mit einer geeigneten Abtastrate gemessen. Beispielsweise kann die Messung alle 25 µs, gleichbedeutend mit einer Abtastfrequenz von 40 kHz, erfolgen. Sobald die voreingestellte untere Schwellschweißspannung Uₛᵤ unterschritten wird, erfolgt eine automatische Umschaltung des Schweißstroms I auf den voreingestellten zweiten Schweißstrom I₂, welcher größer ist als der voreingestellte erste Schweißstrom I₁. Der Abfall der Schweißspannung U ist üblicherweise durch eine Reduktion des Abstands der nichtabschmelzenden Elektrode 2 zum Werkstück 4 verursacht, was einer Reduktion der Länge des Lichtbogens 5 entspricht. Durch die automatische Erhöhung des Schweißstroms I auf den voreingestellten zweiten Schweißstrom I₂ kann ein Festkleben der Elektrode 2 im Schmelzbad verhindert werden. Im Gegensatz zum Stand der Technik bleibt aber die Leistung nicht konstant. Im Gegensatz zu herkömmlichen Schweißvorrichtungen 1, bei welchen diese Erhöhung des Schweißstroms I manuell durch Tastendruck am Schweißbrenner erfolgte, geschieht dies bei der vorliegenden Erfindung automatisch bei Unterschreitung der voreingestellten unteren Schwellschweißspannung Uₛᵤ, wodurch auch ein allfälliger Taster oder dgl. am Schweißbrenner entfallen kann. Wird die Elektrode 2 wieder vom Werkstück 4 weiter entfernt, steigt die Länge des Lichtbogens 5 und dadurch die Schweißspannung U. Sobald die voreingestellte untere Schwellschweißspannung Uₛᵤ wieder überschritten wird, erfolgt eine automatische Umschaltung des Schweißstroms I auf den voreingestellten ersten Schweißstrom I₁. Die Geschwindigkeit, mit der die Umschaltung des Schweißstroms I vom voreingestellten Schweißstrom I₁ zum voreingestellten zweiten Schweißstrom I₂ und zurück erfolgt, kann ebenfalls definiert werden und im Speicher 8 der Stromquelle 3 abgelegt bzw. allenfalls an einer Ein-/Ausgabeeinrichtung 7 auch eingestellt werden. Dabei kann die Anstiegsrate (ΔI/Δt)ₐₙ und die Abfallrate (ΔI/Δt)_{ab} des Schweißstroms I gleich sein oder auch unterschiedlich. Im dargestellten Ausführungsbeispiel gemäß Fig. 2 ist eine hohe Anstiegsrate (ΔI/Δt)ₐₙ und Abfallrate (ΔI/Δt)_{ab} des Schweißstroms I festgelegt, weshalb der zeitliche Verlauf des Schweißstroms I im Wesentlichen rechteckförmig dargestellt ist. Beispielsweise kann die untere Schwellschweißspannung Uₛᵤ typisch bei 10 bis 11 V liegen, wenn die normale Schweißspannung U beispielsweise 12 V beträgt. Eine rasche Anstiegsrate (ΔI/Δt)ₐₙ und Abfallrate (ΔI/ Δt)_{ab} des Schweißstroms I beträgt beispielsweise 1000 A/ms. Übliche Werte für die Anstiegsrate (ΔI/Δt)ₐₙ und die Abfallrate (ΔI/ Δt)_{ab} des Schweißstroms I liegen zwischen 5 A/ms und 1000 A/ms. Wenn der vordefinierte erste Schweißstrom I₁ beispielsweise 150 A beträgt, kann der voreingestellte zweite Schweißstrom I₂ beispielsweise zwischen 180 A und 200 A liegen. Die automatische Umschaltung des Schweißstromes I kann auch mit einer Hysterese erfolgen, also der Abfall des Schweißstroms I auf den zweiten Schweißstrom I₂ mit einer zeitlichen Verzögerung zur Überschreitung der voreingestellten unteren Schwellschweißspannung Uₛᵤ stattfinden.

Fig. 3 zeigt die zeitlichen Verläufe der Schweißspannung U und des Schweißstroms I bei der Unter- und Überschreitung einer voreingestellten unteren Schwellschweißspannung Uₛᵤ und einer automatischen Umschaltung auf einen voreingestellten höheren zweiten Schweißstrom I₂ und zum voreingestellten ersten Schweißstrom I₁ zurück bei einer langsamen Anstiegs- und Abfallrate des Schweißstroms I. Im Gegensatz zum Ausführungsbeispiel gemäß Fig. 2 erfolgt hier die automatische Umschaltung des Schweißstroms I auf den voreingestellten zweiten Schweißstrom I₂ und die Umschaltung zurück auf den voreingestellten ersten Schweißstrom I₁ mit einer geringeren Anstiegsrate (ΔI/Δt)ₐₙ und geringeren Abfallrate (ΔI/ Δt)_{ab} des Schweißstroms I. Dementsprechend ist der zeitliche Verlauf des Schweißstroms I gemäß Fig. 3 im Wesentlichen trapezförmig dargestellt ist, wobei die Dauer des Anstiegs des Schweißstroms I vom voreingestellten ersten Schweißstrom I₁ zum voreingestellten zweiten Schweißstrom I₂ sowie der Abfall des Schweißstroms I vom voreingestellten zweiten Schweißstrom I₂ zum voreingestellten ersten Schweißstrom I₁ länger dauert als beim Beispiel gemäß Fig. 2. Wie bereits oben erwähnt, kann der Abfall des Schweißstroms I auf den zweiten Schweißstrom I₂ auch mit einer zeitlichen Verzögerung gegenüber der Überschreitung der voreingestellten unteren Schwellschweißspannung Uₛᵤ erfolgen, wodurch eine Art Hysterese gebildet wird. Je nach Schweißaufgabe und Material des Werkstücks 4 kann eine unterschiedlich lange Anstiegsrate (ΔI/Δt)ₐₙ und Abfallrate (ΔI/Δt)_{ab} des Schweißstroms I vorteilhaft sein. Beispielsweise kann eine langsame Anstiegsrate (ΔI/Δt)ₐₙ und Abfallrate (ΔI/Δt)_{ab} des Schweißstroms I 5 A/ms betragen.

Fig. 4 zeigt die zeitlichen Verläufe der Schweißspannung U und des Schweißstroms I bei der Unterschreitung einer voreingestellten unteren Schwellschweißspannung Uₛᵤ und einer automatischen Umschaltung auf einen voreingestellten höheren zweiten Schweißstrom I₂ und der Überschreitung einer voreingestellten oberen Schwellschweißspannung Uₛₒ und einer automatischen Umschaltung auf einen voreingestellten niedrigeren dritten Schweißstrom I₃. Die Schweißspannung U wird wiederum während des Schweißprozesses gemessen. Sobald die voreingestellte untere Schwellschweißspannung Uₛᵤ unterschritten wird, erfolgt eine automatische Umschaltung des Schweißstroms I vom voreingestellten ersten Schweißstrom I₁ auf den voreingestellten zweiten Schweißstrom I₂, welcher größer ist als der voreingestellte erste Schweißstrom I₁. Wird die Elektrode 2 wieder vom Werkstück 4 weiter entfernt, steigt die Länge des Lichtbogens 5 und dadurch die Schweißspannung U. Sobald hier eine voreingestellte obere Schwellschweißspannung Uₛₒ überschritten wird, erfolgt eine automatische Umschaltung des Schweißstroms I auf einen voreingestellten dritten Schweißstrom I₃, der kleiner ist als der voreingestellte erste Schweißstrom I₁. Die Geschwindigkeit, mit der die Umschaltung des Schweißstroms I erfolgt, geschieht vorzugsweise mit einer definierten und voreingestellten Anstiegsrate (ΔI/Δt)ₐₙ und Abfallrate (ΔI/Δt)_{ab}. Auch bei der Überschreitung der voreingestellten oberen Schwellschweißspannung Uₛₒ kann eine Art Hysterese vorgesehen werden, indem die Umschaltung auf den voreingestellten dritten Schweißstrom I₃ erst zeitlich verzögert bzw. erst bei der Überschreitung einer um einen bestimmten Spannungswert erhöhten oberen Schwellschweißspannung Uₛₒ. Beispielsweise kann die voreingestellte obere Schwellschweißspannung Uₛₒ im Bereich von 14 V liegen und der voreingestellte dritten Schweißstrom I₃ zwischen 80 A und 100 A, wenn der erste voreingestellte Schweißstrom I₁ 150 A beträgt. Bei Vorsehen einer oben erwähnten Hysterese könnte die Umschaltung auf den voreingestellten dritten Schweißstrom I₃ auch erst bei Überschreitung von beispielsweise 16 V (voreingestellte obere Schwellschweißspannung Uₛₒ + 2 V) erfolgen.

Fig. 5 zeigt die zeitlichen Verläufe der Schweißspannung U und des Schweißstroms I bei der Unterschreitung einer voreingestellten unteren Schwellschweißspannung Uₛᵤ und einer automatischen Umschaltung auf einen voreingestellten höheren zweiten Schweißstrom I₂ und der Überschreitung einer voreingestellten zweiten oberen Schwellschweißspannung Uₛₒ₂ und einer automatischen Senkung des Schweißstroms I auf Null mit einer vordefinierten Abfallrate (ΔI/Δt)_{ab}. Die Schweißspannung U wird wiederum während des Schweißprozesses gemessen. Sobald die voreingestellte untere Schwellschweißspannung Uₛᵤ unterschritten wird, erfolgt eine automatische Umschaltung des Schweißstroms I vom voreingestellten ersten Schweißstrom I₁ auf den voreingestellten zweiten Schweißstrom I₂, welcher größer ist als der voreingestellte erste Schweißstrom I₁. Wird die Elektrode 2 wieder vom Werkstück 4 weiter entfernt, steigt die Länge des Lichtbogens 5 und dadurch die Schweißspannung U. Sobald hier eine voreingestellte zweite obere Schwellschweißspannung Uₛₒ₂ überschritten wird, erfolgt eine automatische Abschaltung des Schweißstroms I auf Null mit einer voreingestellten Abfallrate (ΔI/Δt)_{ab}. Dadurch kann ein ordentliches und sauberes Erlöschen des Lichtbogens 5 und ein bevorzugtes Beenden des Schweißprozesses erreicht werden. Wie bereits weiter oben erwähnt, handelt es sich bei der voreingestellten zweiten oberen Schwellschweißspannung Uₛₒ₂ um die sogenannte Abrissspannung, ab der ein Schweißen nicht mehr möglich ist. Die Abrissspannung, welche beispielsweise im Bereich zwischen 15 V und 17 V liegen kann, ist prozess- bzw. materialabhängig und üblicherweise in der Kennlinie bzw. der Tabelle der Schweißparameter hinterlegt oder vom Schweißer einstellbar.

Fig. 6 zeigt schematisch ein Handschweißen eines Werkstücks 4 mit sich ändernder Oberfläche und die zeitlichen Verläufe des zugehörigen Schweißstroms I und der zugehörigen Schweißspannung U bei der Anwendung des erfindungsgemäßen Verfahrens. Wird nun die Schweißvorrichtung 1 im Wesentlichen horizontal entlang der strichlierten Linie von links nach rechts bewegt, so ändert sich aufgrund der Geometrie des Werkstücks 4 die Länge des Lichtbogens 5 und somit die Schweißspannung U. Zunächst erfolgt die Schweißung mit einem voreingestellten ersten Schweißstrom I₁. Wird der Abstand zwischen Elektrode 2 und Werkstück 4 geringer, reduziert sich die Länge des Lichtbogens 5 und dadurch die Schweißspannung U. Sobald die voreingestellte untere Schwellschweißspannung Uₛᵤ unterschritten wird, erfolgt eine automatische Umschaltung des Schweißstroms I auf den voreingestellten zweiten Schweißstrom I₂, der größer ist, als der voreingestellte erste Schweißstrom I₁. Wird der Abstand zwischen Elektrode 2 und Werkstück 4 wieder größer, erhöht sich die Länge des Lichtbogens 5 und dadurch die Schweißspannung U wieder. Sobald die voreingestellte untere Schwellschweißspannung Uₛᵤ wieder überschritten wird, erfolgt eine automatische Umschaltung des Schweißstroms I auf den voreingestellten ersten Schweißstrom I₁. Die Geschwindigkeit, der Umschaltung des Schweißstroms I vom voreingestellten Schweißstrom I₁ zum voreingestellten Schweißstrom I₂ und zurück erfolgt mit einer voreingestellten Anstiegsrate (ΔI/Δt)ₐₙ und Abfallrate (ΔI/Δt)_{ab} des Schweißstroms I. Zusätzlich erfolgt in diesem Ausführungsbeispiel die Umschaltung des Schweißstroms I nur dann, wenn die Schweißspannung U die voreingestellte untere Schwellschweißspannung Uₛᵤ eine bestimmte definierte Mindestdauer Δtₘᵢₙ unter- bzw. überschreitet. Durch die Definition einer solchen Mindestdauer Δtₘᵢₙ des Unter- bzw. Überschreitens der Schwellschweißspannung Uₛᵤ wird die Gefahr eines Schwingens und einer Fehlauslösung der Umschaltung des Schweißstroms I verhindert. Am Ende des Schweißprozesses wird die Elektrode 2 vom Werkstück 4 abgehoben, wodurch die Schweißspannung U steigt. Wird zunächst die untere Schwellschweißspannung Uₛᵤ wieder überschritten, erfolgt eine automatische Umschaltung des Schweißstroms I auf den voreingestellten ersten Schweißstrom I₁. Wird die Elektrode 2 noch weiter vom Werkstück 4 entfernt, steigt die Länge des Lichtbogens 5 und dadurch die Schweißspannung U noch weiter an. Sobald eine voreingestellte zweite obere Schwellschweißspannung Uₛₒ₂ überschritten wird, erfolgt eine automatische Abschaltung des Schweißstroms I auf Null nach einer voreingestellten Abfallrate (ΔI/Δt)_{ab}. Dadurch wird ein ordentliches und sauberes Erlöschen des Lichtbogens 5 und ein Beenden des Schweißprozesses erreicht.

## Patentansprüche

1. Verfahren zum Handschweißen eines Werkstücks (4) mit einer nichtabschmelzenden Elektrode (2), insbesondere einer Wolfram-Elektrode, wobei von einer Stromquelle (3) ein voreingestellter erster Schweißstrom (I₁) zwischen der Elektrode (2) und dem Werkstück (4) zur Bildung eines Lichtbogens (5) eingeprägt wird, und während des Schweißens der Schweißstrom (I) auf einen voreingestellten zweiten Schweißstrom (I₂), der größer ist als der voreingestellte erste Schweißstrom (I₁), erhöht wird, **dadurch gekennzeichnet, dass** während des Schweißens die Schweißspannung (U) gemessen wird, und bei Unterschreitung einer voreingestellten unteren Schwellschweißspannung (Uₛᵤ) der Schweißstrom (I) automatisch auf den voreingestellten zweiten Schweißstrom (I₂) und bei Überschreitung der voreingestellten unteren Schwellschweißspannung (Uₛᵤ) automatisch auf den voreingestellten ersten Schweißstrom (I₁) umgeschaltet wird.

2. Verfahren nach Anspruch 1, **dadurch gekennzeichnet, dass** bei Überschreitung einer voreingestellten oberen Schwellschweißspannung (Uₛₒ) der Schweißstrom (I) automatisch auf einen voreingestellten dritten Schweißstrom (I₃), der kleiner ist als der voreingestellte erste Schweißstrom (I₁), und bei Unterschreitung der voreingestellten oberen Schwellschweißspannung (Uₛₒ) automatisch auf den voreingestellten ersten Schweißstrom (I₁) umgeschaltet wird.

3. Verfahren nach Anspruch 1 oder 2, **dadurch gekennzeichnet, dass** bei Unterschreitung der voreingestellten unteren Schwellschweißspannung (Uₛᵤ) der Schweißstrom (I) mit einer voreingestellten Anstiegsrate ((ΔI/Δt)ₐₙ) auf den voreingestellten zweiten Schweißstrom (I₂) und bei Überschreitung der voreingestellten unteren Schwellschweißspannung (Uₛᵤ) der Schweißstrom (I) mit einer voreingestellten Abfallrate ((ΔI/Δt)_{ab}) auf den voreingestellten ersten Schweißstrom (I₁) umgeschaltet wird.

4. Verfahren nach Anspruch 2 oder 3, **dadurch gekennzeichnet, dass** bei Überschreitung der definierten oberen Schwellschweißspannung (Uₛₒ) der Schweißstrom (I) mit einer voreingestellten Abfallrate ((ΔI/Δt)_{ab}) auf den voreingestellten dritten Schweißstrom (I₃) und bei Unterschreitung der definierten oberen Schwellschweißspannung (Uₛₒ) der Schweißstrom (I) mit einer voreingestellten Anstiegsrate ((ΔI/Δt)ₐₙ) auf den voreingestellten ersten Schweißstrom (I₁) umgeschaltet wird.

5. Verfahren nach einem der Ansprüche 1 bis 4, **dadurch gekennzeichnet, dass** bei Überschreitung einer voreingestellten zweiten oberen Schwellschweißspannung (Uₛₒ₂) der Schweißstrom (I) automatisch mit einer voreingestellten Abfallrate ((ΔI/Δt)_{ab}) auf Null gesenkt wird.

6. Verfahren nach einem der Ansprüche 1 bis 5, **dadurch gekennzeichnet, dass** der Schweißstrom (I) auf den voreingestellten zweiten Schweißstrom (I₂) und bzw. oder voreingestellten dritten Schweißstrom (I₃) umgeschaltet wird, wenn die Schweißspannung (U) die voreingestellte untere Schwellschweißspannung (Uₛᵤ) bzw. die voreingestellte obere Schwellschweißspannung (Uₛₒ) bzw. die voreingestellte zweite obere Schwellschweißspannung (Uₛₒ₂) eine bestimmte Mindestdauer (Δtₘᵢₙ) unter- bzw. überschreitet.

7. Verfahren nach einem der Ansprüche 1 bis 6, **dadurch gekennzeichnet, dass** die gemessene Schweißspannung (U) vor dem Vergleich mit der voreingestellten unteren Schwellschweißspannung (Uₛᵤ), der voreingestellten oberen Schwellschweißspannung (Uₛₒ) oder der voreingestellten zweiten oberen Schwellschweißspannung (Uₛₒ₂) über die Zeit (t) gemittelt wird.

8. Vorrichtung (1) zum Handschweißen eines Werkstücks (4) mit einer nichtabschmelzenden Elektrode (2), insbesondere einer Wolfram-Elektrode, mit einer Stromquelle (3) zum Einprägen eines Schweißstroms (I) zwischen der Elektrode (2) und dem Werkstück (4) zur Bildung eines Lichtbogens (5), und mit einer Steuereinrichtung (6), welche zur Messung der Schweißspannung (U) zwischen der nichtabschmelzenden Elektrode (2) und dem Werkstück (4) und zur Messung des Schweißstroms (I) ausgebildet ist, **dadurch gekennzeichnet, dass** die Steuereinrichtung (6) zur Durchführung des Verfahrens nach einem der Ansprüche 1 bis 7 ausgebildet ist.

9. Vorrichtung (1) nach Anspruch 8, **dadurch gekennzeichnet, dass** eine Ein-/Ausgabeeinrichtung (7) zur Einstellung und Anzeige des voreingestellten ersten Schweißstroms (I₁), des voreingestellten zweiten Schweißstroms (I₂), der voreingestellten unteren Schwellschweißspannung (Uₛᵤ), der voreingestellten oberen Schwellschweißspannung (Uₛₒ), der voreingestellten zweiten oberen Schwellschweißspannung (Uₛₒ₂), der voreingestellten Anstiegsrate ((ΔI/Δt)ₐₙ) des Schweißstroms (I) oder der voreingestellten Abfallrate ((ΔI/Δt)_{ab}) des Schweißstroms (I) vorgesehen ist.

10. Vorrichtung (1) nach Anspruch 8, **dadurch gekennzeichnet, dass** die Ein-/Ausgabeeinrichtung (7) mit einem Speicher (8) verbunden ist.
